# FASCICULE DE BREVET EUROPEEN

(11) **EP 3 096 940 B1**
(45) Date de publication et mention de la délivrance du brevet: **21.04.2021**
(21) Numéro de dépôt: 14824847.9
(22) Date de dépôt: 24.12.2014
(51) Int. Cl.: B29C 70/34, B29C 70/38, B29C 70/54

(54) **PROCÉDÉ ET DISPOSITIF POUR L'ESTAMPAGE D'UN FLAN COMPOSITE À MATRICE THERMOPLASTIQUE NON CONSOLIDÉ**
VERFAHREN UND VORRICHTUNG ZUM PRÄGEN EINES VERBUNDROHLINGS MIT NICHTKONSOLIDIERTER THERMOPLASTISCHER MATRIX
METHOD AND DEVICE FOR STAMPING A COMPOSITE BLANK WITH NON-CONSOLIDATED THERMOPLASTIC MATRIX

(30) Priorité: 24.12.2013 FR 1363575
(43) Date de publication de la demande: 30.11.2016
(73) Titulaire: Daher Aerospace, 41400 Saint Julien De Chedon (FR)
(72) Inventeur: VAUDOUR, Julie, F-44118 La Chevrolière (FR); PELARD, Alexandre, F-37400 Amboise (FR)
(74) Mandataire: Ipside
(86) Numéro de dépôt international: PCT/EP2014/079340
(87) Numéro de publication internationale: WO 2015/097301

(56) Documents cités:
- WO-A2-2010/097547
- FR-A1- 2 905 891
- FR-A1- 2 929 167
- US-A1- 2011 115 128
- US-A1- 2012 269 999

## Description

L'invention concerne un procédé et un dispositif pour l'estampage d'un flan composite à matrice thermoplastique non consolidé. L'invention est plus particulièrement, mais non exclusivement, adaptée à l'obtention d'une pièce composite en forme, renforcée par des fibres continues de carbone, de verre ou d'aramide dans une matrice thermoplastique, avec des taux de renforts massiques compris entre 50 % et 70 %, ou moins. Ainsi, l'invention est plus particulièrement adaptée au domaine aéronautique mais est avantageusement adaptable à d'autres domaines techniques dans lesquels les exigences en matière de structure et de fiabilité sont similaires.

Selon l'art antérieur, une pièce composite à matrice thermoplastique en forme, est obtenue par l'estampage à chaud d'un flan composite stratifié consolidé. Lorsque la phase de renfort dudit composite est constituée de fibres continues, la mise en forme du flan par estampage implique un glissement interlaminaire des plis constituant la stratification dudit composite. Ce glissement interlaminaire n'est possible que si la matrice dudit composite se trouve dans un état suffisamment fluide lors de l'opération d'estampage. Cet état est obtenu en chauffant le flan, préalablement à l'estampage, à une température supérieure à la température de fusion du polymère constituant la matrice de ce composite. Lorsque ce polymère est un polymère thermoplastique à haute performance tel qu'un polyétheréthercétone, ou PEEK, cette température de chauffage est élevée, couramment comprise en 350°C et 440°C. Cette température doit être atteinte dans tout le volume du flan, pour permettre le glissement des plis de fibres continues, et éviter l'introduction de tension dans les fibres, d'essorage entre les fibres et d'ondulation de fibres, ces défauts ayant des conséquences désastreuses sur les caractéristiques mécaniques de la pièce ainsi obtenues. Ainsi, il est couramment admis et observé expérimentalement, que le flan objet de cette opération d'estampage doit être exempt de défauts tels que des porosités. En effet, selon les constats expérimentaux de l'art antérieur, la présence d'une lame d'air dans la stratification, même sur une courte distance, crée au chauffage un défaut d'uniformité de température, défaut qui se traduit par un point de fixation entre les plis ou les fibres concernés, lequel point de fixation s'oppose localement au glissement interlaminaire. De plus, cette lame d'air récolte les produits de dégazage lors du chauffage du flan et ne sera pas refermée lors de l'estampage. Ainsi, selon l'art antérieur, le procédé de mise en oeuvre d'un matériau composite à matrice thermoplastique par estampage, part du constat que toute porosité présente dans le flan sera présente dans la pièce finale issue de l'estampage de ce flan.

Ainsi, le procédé d'estampage selon l'art antérieur est mis en oeuvre au moyen de flans détourés en panoplie dans une plaque consolidée, un soin particulier étant apporté à la réalisation de ladite plaque, laquelle fait l'objet de contrôles tout aussi sévères que sur la pièce finale, ce qui augmente le coût des pièces obtenues par ce procédé de l'art antérieur. Le document WO 2013/127965 décrit un procédé permettant d'obtenir une telle plaque consolidée.

La consolidation d'un composite comprenant une matrice constituée d'un polymère thermoplastique comprend trois phénomènes :
- un phénomène essentiellement mécanique, qui sous l'effet de la pression et de la viscosité du polymère tend à créer un contact intime entre les plis ;
- un phénomène essentiellement chimique dit autohésion, qui entraîne une adhésion des plis entre eux par la diffusion des segments moléculaires à travers l'interface puis toute l'épaisseur des plis ;
- un phénomène d'écoulement du polymère, parfois dénommé imprégnation, et qui permet de remplir les vides fermés subsistant dans le matériau.

Le document FR 2 987 304 décrit un procédé d'estampage à chaud d'un matériau composite à renfort continu, utilisant un flan dans un état, dit pré-consolidé, obtenu par placement de fibres et une autohésion partielle entre les plis, c'est à dire une adhésion des plis entre eux sur toute leur interface de contact, sans vide à l'interface, les segments de chaînes moléculaires du polymère constituant la matrice diffusant sur une épaisseur très limitée entre les plis, de part et d'autre de l'interface. Cet état se distingue de l'état dit consolidé, où l'autohésion est importante, où les chaînes moléculaires du polymère constituant la matrice s'étendant et s'entremêlant sur toute l'épaisseur des plis. Bien que ce procédé apporte une amélioration par rapport à l'art antérieur, il nécessite néanmoins d'atteindre un niveau de qualité du flan encore élevé, avec un taux de porosité inférieur à 1 %. Aussi, le procédé étant réalisé à haute température, c'est-à-dire à une température supérieure à la température de fusion du matériau, le phénomène d'imprégnation se produit et permet d'atteindre ce faible niveau de porosité.

Le document FR 2 922 276 / WO 2010 0097547 décrit un procédé pour l'obtention d'une pièce en forme, utilisant un assemblage de plis non consolidés. Ce procédé n'est pas un procédé d'estampage, il s'agit d'un procédé assimilable à un moulage, l'assemblage non consolidé de plis subissant un cycle complet de chauffage refroidissement, incluant sa consolidation, à l'intérieur d'un moule fermé dont la cavité est tirée au vide. Le tirage au vide de la cavité fermé permet de supprimer les lames d'air entre les plis. La productivité d'un tel procédé est modeste en regard du procédé d'estampage et ne produit pas ou très peu de glissement interlaminaire comparé au procédé d'estampage.

Le document FR 2 905 891 décrit un procédé pour la consolidation d'un empilement de plis fibreux pré-imprégnés d'un polymère thermoplastique.

Le document FR 2 929 167 décrit un procédé pour la consolidation/compactage d'un flan comprenant un empilement de tissus imprégnés d'un polymère thermoplastique, lequel flan, compacté et consolidé, est ultérieurement utilisé dans une opération de formage par estampage.

L'invention vise à résoudre les inconvénients de l'art antérieur et concerne à cette fin un procédé ,selon la revendication 1, pour la réalisation, par estampage à chaud, d'une pièce composite à renfort fibreux continu dans une matrice thermoplastique.

Ainsi, de manière surprenante et contraire aux certitudes de l'homme du métier; l'utilisation exclusive de nappes unidirectionnelles pour la constitution des plis permet un estampage direct du flan ainsi constitué, non consolidé, même en l'absence de tout assemblage des plis entre eux, sans création de défaut dans la pièce ainsi obtenue. Les termes « non consolidé » désignent à la fois un empilage de pli exempt de toute l'empilement constituant le flan et est mis en oeuvre, du point de vue de l'estampage, dans les mêmes conditions que l'estampage d'un flan consolidé selon l'art antérieur.

Le terme « préimprégné » s'agissant de fibres thermoplastiques, est ici utilisé dans le sens de mèches thermoplastiques calandrées avec un film de polymère, poudrées d'un polymère thermoplastique ou comprenant des fibres thermoplastique co-mêlées avec les fibres de renfort. Dans tous les cas, les fibres de renfort elles-mêmes ne sont pas imprégnées ou ne sont que partiellement imprégnées de ce polymère. Ce type de produit correspond aux produits effectivement disponibles commercialement sous la dénomination impropre de préimprégné.

Les termes « à l'air libre » signifient que lors du chauffage le flan ne se situe pas dans un espace confiné et n'est soumis à aucun vide ou aucune pression autre que la pression atmosphérique.

L'invention est avantageusement mise en oeuvre selon les modes de réalisation exposés ci-après lesquels sont à considérer individuellement ou selon toute combinaison techniquement opérante.

Selon un mode de réalisation particulier du procédé objet de l'invention, l'étape a) comprend une étape consistant à assembler les plis par des points de soudure. Ainsi, la cohésion du flan avant son estampage est améliorée. La limitation de l'assemblage des plis entre eux à des points de soudure permet de conserver l'effet surprenant.

Selon un autre mode de réalisation particulier du procédé objet de l'invention, chaque pli est constitué de bandes assemblées bord à bord par une soudure. Ce mode de réalisation permet l'obtention facile de flans de largeur importante, notamment qui comprennent des fibres orientées selon des directions obliques, en conférant audit flan suffisamment de cohésion pour qu'il puisse être manipulé sans risque de désorienter lesdites bandes.

Selon un troisième mode de réalisation, le procédé objet de l'invention comprend avant l'étape a) une étape consistant à :
d. sélectionner, pour la constitution de la matrice, un polymère thermoplastique comportant une température de recristallisation entre la température de transition vitreuse, Tg, et la température de fusion, Tf, dudit polymère ;
l'étape a) comprenant une étape consistant à :
ai. draper les plis, sous la forme de bandes pré-imprégnées, au moyen d'une machine à draper comportant un moyen de chauffage de ladite bande, lors de la dépose, la température de chauffage étant inférieure à la température de fusion du polymère et supérieure à la température de recristallisation.

Ce mode de réalisation incluant une sélection des caractéristiques du polymère constituant la matrice permet, dans des conditions déterminées, de réaliser un assemblage des plis entre eux sur toute leur surface de contact et de réaliser un brut par des moyens de drapage automatiques. Ainsi, un brut, sous la forme d'une plaque de grandes dimensions, est obtenu de manière économique, et, bien qu'il ne soit pas consolidé, ni même partiellement consolidé, la cohésion dudit brut permet la réalisation de flans de formes complexes, par exemple, par détourage. Alternativement le flan est obtenu directement par drapage de bande larges ou par placement automatique de fibres. Dans ce dernier cas le procédé objet de l'invention permet de mieux respecter l'orientation des fibres par rapport au contour du flan, notamment pour des pièces courbes. Ledit brut ou ledit flan sont réalisés de manière économique sans étape de consolidation. Le chauffage des bandes déposées dans les conditions du procédé objet de l'invention permet de conférer auxdites bandes une pégosité suffisante pour le drapage automatique, sans consolidation des plis. Selon un deuxième effet surprenant, la combinaison de la sélection du matériau et de l'utilisation d'une température réduite d'assemblage des bandes unidirectionnelles lors du drapage, permet d'obtenir une pièce exempte de défaut en estampage direct, c'est-à-dire sans étape de consolidation entre le drapage et l'estampage.

Avantageusement, l'étape d) comprend les étapes consistant à :

| | |
|---|---|
| di | réaliser une analyse calorimétrique différentielle à balayage du pré-imprégné ; |
| dii. | sélectionner ledit préimprégné si le résultat de ladite calorimétrie différentielle à balayage fait apparaître au chauffage un pic exothermique entre la température de transition vitreuse et la température de fusion du polymère. |

Ainsi, une méthode simple de caractérisation permet de vérifier l'adaptation du pré-imprégné à la mise en oeuvre réussie du procédé objet de l'invention dans ses modes de réalisation comportant un assemblage continu des plis ou des bandes constituant les plis. Selon l'invention, la température à laquelle survient le pic exothermique est dite « température de recristallisation » un tel phénomène de recristallisation étant le plus vraisemblable pour expliquer la présence d'un tel pic exothermique sur la courbe d'analyse calorimétrique au chauffage, sans être lié par une quelconque théorie.

Selon un mode de réalisation particulier, le polymère constituant la matrice est un polyétheréthercétone semi-cristallin dont le taux de cristallinité à température ambiante est compris entre 5 % et 20 %. Cette sélection particulière du polymère constituant la matrice, compatible avec les étapes di) et dii) du procédé objet de l'invention, permet de réduire considérablement le coût d'obtention d'une pièce composite à haute performance.

Avantageusement, lorsque le polymère est un PEEK, l'étape ai) est réalisée à une température comprise entre 200 °C et 330 °C, préférentiellement 250 °C. En plus des avantages exposés précédemment, ce drapage avec chauffage à basse température permet d'améliorer la qualité du flan ou du brut, en évitant les phénomènes d'oxydation du PEEK au cours du drapage.

Selon un mode de réalisation particulier du procédé objet de l'invention, l'étape a) est réalisée en empilant les plis sur un outillage, dit de transfert, comportant des moyens de positionnement et de maintien des plis sur leur périphérie. Ce mode de réalisation permet la création d'un flan d'estampage à partir de plis non assemblés et supprime ainsi complètement l'étape de l'art antérieur consistant à réaliser un brut consolidé.

Avantageusement, l'outillage de transfert est un cadre l'étape b) étant réalisée alors que les plis empilés lors de l'étape a) sont sur ledit cadre.

Selon une variante de réalisation, l'outillage de transfert comprend un film polyimide, les plis étant assemblés et maintenus sur ledit film par un ruban adhésif sur leur périphérie. Ce mode de réalisation est particulièrement simple de mise en oeuvre.

L'invention est exposée ci-après selon ses modes de réalisation préférés, nullement limitatifs, et en référence aux figures 1 à 3 dans lesquelles :
- la figure 1 montre schématiquement un exemple de réalisation du procédé objet de l'invention, mettant en oeuvre un assemblage de bandes unidirectionnelles, illustré figure 1A selon une vue de dessus, un chauffage de l'empilement ainsi réalisé, illustré figure 1B selon une vue en coupe AA définie figure 1A, et un estampage illustré figure 1C selon une vue en coupe AA ;
- la figure 2 représente un exemple de courbes d'analyse thermique différentielle pratiquées sur deux pré-imprégnés thermoplastiques ;
- et la figure 3 est une vue schématique en perspective et en éclaté d'une exemple d'assemblage de bandes unidirectionnelles sur un outillage de transfert constitué d'un film polyimide, selon un exemple de réalisation du procédé objet de l'invention.

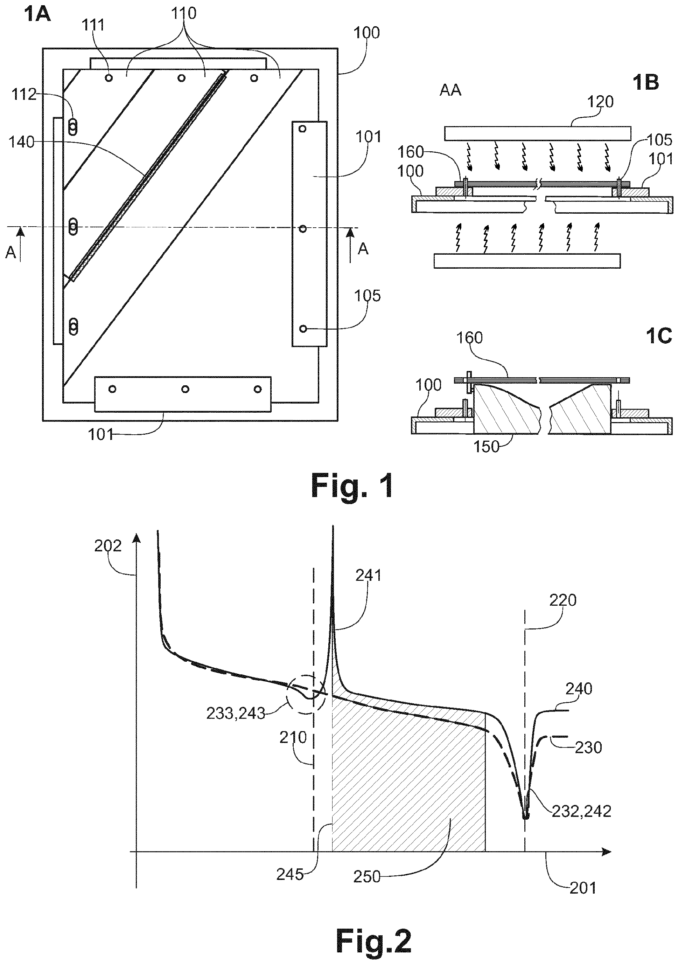

Figure 1A, selon un exemple de réalisation du procédé objet de l'invention, des bandes (110), constitués de nappes de fibres unidirectionnelles préimprénées d'un polymère thermoplastique, sont posées sur un outillage (100), dit cadre de transfert. Ledit outillage comporte un cadre de support sur lequel son fixées des platines (101), chacune de ces platines comportant des moyens (105) de positionnement, par exemple, sous la forme d'un doigt faisant saillie par rapport à ladite platine (101). Chaque bande (110) unidirectionnelle comporte une ou plusieurs lumières (111, 112) aptes à coopérer avec lesdits moyens (105) de positionnement. Les bandes (110) unidirectionnelles présentent individuellement une rigidité suffisante pour être ainsi placées manuellement ou par l'intermédiaire d'un moyen automatique, par exemple un robot de type « *pick and place* » équipé d'une ventouse, sur ledit cadre (100). Un empilement de plis unidirectionnels est ainsi obtenu sans que, ni les plis, ni les bandes, ne soient liés entre eux.

Figure 1B, selon un exemple de réalisation, le cadre (100) est utilisé comme cadre de transfert et l'empilement ainsi réalisé, constituant le flan (160) pour l'estampage, sont placés sous des moyens de chauffage (120), par exemple, des panneaux radiants. Lesdits moyens de chauffage portent le flan (160) à une température supérieure à la température de fusion, Tf, du polymère thermoplastique. À titre d'exemple non limitatif, si ledit polymère est un PEEK, cette température de chauffage atteint 440 °C.

Figure 1C, après cette étape de chauffage, le flan (160) est estampé en le déformant entre une matrice (150) et un effecteur (non représenté) de forme complémentaire à celle de la matrice (150) de sorte à constituer une pièce en forme. La pièce ainsi obtenue est, de manière surprenante, exempte de défaut.

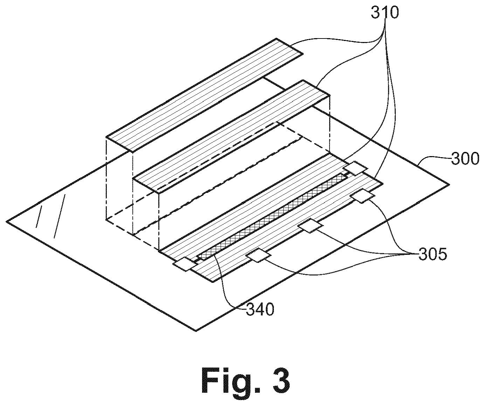

Figure 3, selon une variante de réalisation les bandes (310) de nappes unidirectionnelles sont posées sur un film (300) polyimide résistant à la température atteinte lors du processus d'estampage, et qui est utilisé comme outillage de transfert. Selon cet exemple de réalisation, lesdites bandes (310) sont simplement maintenues sur leur périphérie sur ledit film (300), au moyen de rubans (305) adhésifs, adaptés à la température de mise en oeuvre du procédé. L'opération de chauffage préalable à l'estampage et l'opération d'estampage elle-même sont réalisées alors que les bandes (310) sont sur le film (300) polyimide selon des techniques connues de l'art antérieur.

Sans être lié par une quelconque théorie, il est supposé que l'utilisation de bandes unidirectionnelles et l'absence d'assemblage continu entre les plis permettent d'évacuer les gaz et l'air lors du foisonnement du polymère au chauffage et lors de l'estampage. Ce mode de réalisation est adapté lorsque le flan est de dimensions suffisamment réduites, ou que sa forme est simple, de sorte que le positionnement des bandes de nappes unidirectionnelles est réalisable avec un nombre réduit de moyens de positionnement. Dans les autres cas, un assemblage des plis ou des bandes, est nécessaire.

Selon un mode de réalisation, un assemblage des plis est réalisé par des points de soudure. Ce mode de réalisation permet de pré-assembler les plis constituant le flan selon l'épaisseur dudit flan. Cette soudure par points est aisément réalisée sur l'outillage de transfert ou en dehors dudit outillage, au moyen d'un fer à souder apte à porter localement à sa température de fusion le polymère préimprégnant les fibres. Ces points de soudure confèrent au flan, une certaine cohésion qui permet de le manipuler en dehors de l'outillage de transfert, sans perdre les avantages du procédé objet de l'invention. Selon une autre variante de réalisation compatible avec la précédente, les bandes (110, 310) sont soudées bord à bord au moyen de lignes de soudure (140, 340). Ces lignes de soudure s'étendent sur un faible largeur de part et d'autre des bords des bandes en contact et sont obtenues, par exemple, au moyen d'un fer à souder apte à porter le polymère préimprégnant les bandes (110, 310) à sa température de fusion. Alternativement, ladite soudure est réalisée par d'autres moyens connus de l'art antérieur, par exemple, au moyen d'un chauffage par rayon laser.

Lorsque le flan comporte un détourage complexe qui nécessite qu'il soit découpé dans un brut, ou encore lorsque la forme la pièce nécessite que la stratification soit obtenue par placement de fibres, de sorte que les fibres soit correctement orientées en tout point par rapport à cette forme, ou encore lorsque le flan est de grande dimension, ledit brut ou le flan sont préférentiellement obtenus par drapage automatique. Dans tout le texte, le terme drapage s'entend du drapage de bandes et du placement de fibres, les conditions essentielles de mise en oeuvre de ces procédés étant similaires dans le contexte de l'invention.

Selon un troisième mode de réalisation du procédé objet de l'invention, le brut est réalisé par drapage et assemblage entre eux des bandes et des plis. Ce drapage est réalisé par une dépose automatique ou manuelle de bandes d'une largeur comprise entre 3 mm et 305 mm (12"), lesquelles bandes sont assemblées entre elles sur toute la surface de leurs interfaces. La dépose de bande étroites (3 mm par exemple) est obtenue préférentiellement au moyen d'une machine ou d'un robot apte au placement de fibres. Dans le cas de bandes larges celles-ci sont déposées au moyen d'une machine à draper ou manuellement. Ce mode de réalisation permet, de manière surprenante, d'obtenir une pièce exempte de défaut, sans passer par une étape de consolidation du brut. Ce résultat est obtenu en combinant les trois conditions de mise en oeuvre suivantes :
- le drapage est mis en oeuvre au moyens de bandes constitués de fibres unidirectionnelles ;
- le polymère thermoplastique imprégnant les fibres comporte une température de recristallisation comprise entre la température de transition vitreuse et la température de fusion ;
- la température de chauffage des bandes au cours de la dépose est supérieure à la température de recristallisation et inférieure à la température de fusion, Tf, du polymère imprégnant les fibres.

Le chauffage des bandes pré-imprégnées d'un polymère thermoplastique est indispensable lors du drapage. En effet, lesdites bandes ne sont pas pégueuses, et doivent être chauffées pour adhérer sur la préforme déjà déposée. Selon l'art antérieur, les machines aptes au drapage automatique de fibres préimprégnées d'un polymère thermoplastique utilisent à cette fin un chauffage à une température égale ou supérieure à la température de fusion dudit polymère. Ainsi, dans le cas où ce polymère est un PEEK, dont la température de fusion est 343 °C, cette température de chauffage au cours de la dépose, selon l'art antérieur, est typiquement de 400 °C ou plus. Dans le cas du procédé objet de l'invention, la température de chauffage au cours de la dépose est, selon un exemple de réalisation, limitée à 250 °C pour une bande préimprégnée de PEEK. Cette basse température ne produit pas la fusion dudit polymère. Ainsi, d'une part, le phénomène d'imprégnation ne se produit pas et il subsiste des porosité dans l'assemblage, d'autre part la diffusion moléculaire à l'interface est ralentie et par conséquent ne permet pas le phénomène d'autohésion. Toutefois ce chauffage à basse température confère à la bande, ou à la région de la bande ainsi chauffée, une pégosité suffisante pour adhérer à la préforme. Sans être lié par une quelconque théorie, il est supposé que l'adhésion entre les plis se produit par la co-cristallisation des phases amorphes du polymère, de part est d'autre de l'interface. Cette cocristallisation étant obtenue par la recristallisation au chauffage du polymère.

Cette possibilité surprenante de limiter la température de chauffage au cours de la dépose et de réaliser ensuite un estampage à partir d'un flan non consolidé, tout en assurant la qualité de la matière de la pièce finale, n'est vérifiée qu'en utilisant des bandes constituées de nappes de fibres unidirectionnelles et un sélectionnant un polymère thermoplastique faisant apparaître un pic de recristallisation entre sa température de transition vitreuse et sa température de fusion.

Figure 2, l'analyse calorimétrique différentielle en balayage est une technique de caractérisation connue de l'art antérieur. Elle permet de mesurer la variation d'enthalpie de la matière au cours de son chauffage et consiste à chauffer deux échantillons, l'un étant constitué du matériau à tester et l'autre d'un matériau témoin. Les deux échantillons sont chauffés dans deux fours séparés en maintenant une différence de température nulle entre les deux échantillons. La tracé donne le flux thermique (202) entre les deux échantillons en fonction de la température (201). L'apparition d'un pic dans cette évolution témoigne de la présence d'une transition de phase mettant en jeu une chaleur latente de transition. Selon la nature de la transition de phase, ledit pic (232, 242) est pointé vers le bas, il est dit alors « endothermique », ou pointé vers le haut, il est alors qualifié « d'exothermique ».

Le tracé de la courbe (230) d'analyse calorimétrique différentielle correspondant à un pré-imprégné de fibres de carbone PEEK ayant un tau de cristallinité de 30% à température ambiante, fait apparaître, au chauffage, une première (233) perturbation de la courbe correspondant au passage de la température (210) de transition vitreuse (Tg), puis un pic (232) endothermique à la température (220) de fusion (Tf) du polymère. Le tracé de la courbe (240) d'analyse calorimétrique différentielle d'un préimprégné de carbone - PEEK dont le PEEK présente un taux de cristallinité compris entre 5 % et 20 % à température ambiante, fait apparaître au chauffage une première perturbation (243) correspondant au passage de la transition vitreuse, Tg, puis un pic (241) exothermique, avant le pic (242) endothermique de fusion. Ce pic (241) exothermique, se produisant au chauffage, est interprété comme un pic de recristallisation. La température (245) sensiblement centrée sur ledit pic (241) exothermique est dite température de recristallisation car elle se produit au chauffage, le matériaux étant initialement à l'état cristallisé. Le matériau dont le tracé (230) ne fait pas apparaître un tel pic (241) de recristallisation, c'est-à-dire, selon cet exemple, le préimprégné d'un PEEK dont le taux de cristallinité à température ambiante est supérieur à 20 %, n'est pas adapté aux modes de réalisation du procédé objet de l'invention, qui mettent en oeuvre un assemblage des bandes de nappes unidirectionnelles sur toute leur surface de contact, c'est-à-dire, essentiellement, une dépose des bandes par un moyen de drapage automatisé. Par contre, le matériau dont le tracé (240) de l'analyse calorimétrique fait apparaître un pic (241) exothermique au chauffage permet un assemblage de bandes unidirectionnelles sur toute leur surface, à condition que cet assemblage soit réalisé par un chauffage des bandes dans une plage (250) de température comprise entre la température (245) du pic (241) exothermique et la température (220) de fusion. Par exemple, pour un préimprégné de PEEK dont le taux de cristallinité à température ambiante est compris entre 5 % et 20 %, le drapage automatique les bandes pré-imprégnées est réalisable à une température de 250 °C. Cette basse température permet également d'éviter les phénomènes d'oxydation dudit polymère lors du chauffage correspondant. Ce chauffage continu à basse température permet de conférer aux bandes préimprégnées une pégosité suffisante pour les mettre en oeuvre selon un procédé de drapage automatisé.

Un préimprégné thermoplastique, ne présentant pas un tel pic (241) de recristallisation, par exemple un préimprégné de PEEK dont le taux de cristallinité à température ambiante est de 30 %, ne peut pas être assemblé lors d'une opération de drapage ou de placement de fibre par un chauffage dans une plage (250) de température aussi basse, car un tel chauffage ne lui confère pas une pégosité suffisante pour permettre l'adhésion des bandes sur la préforme. Aussi, dans le cas du drapage automatisé d'un préimprégné de PEEK dont le taux de cristallinité à température ambiante est supérieur à 20 %, la température de chauffage au cours du drapage doit être supérieure ou égale à la température (220) de fusion du PEEK, l'adhésion des bandes déposées sur la préforme étant alors nécessairement accompagnée d'une autohésion, même partielle, des plis entre-eux. Par contre, ce PEEK dont le taux de cristallinité à température ambiante est de 20 % ou plus est apte à être mis en oeuvre par les modes de réalisation du procédé objet de l'invention sans assemblage des plis ou avec un assemblage par soudure partielle, par point ou par ligne de soudure.

La description ci-avant et les exemples de réalisation montrent que l'invention atteint les objectifs visés, en particulier, par l'utilisation de plis constitués de fibres unidirectionnelles préimprégnées de tout polymère thermoplastique, elle permet l'estampage de plis non assemblés ou partiellement assemblés par points, et, par une sélection d'un polymère imprégnant les plis, laquelle sélection répond à des caractéristiques particulières et est associée à des conditions de drapage spécifiques, le procédé objet de l'invention, permet d'obtenir un résultat similaire en mettant en oeuvre un brut obtenu par drapage automatisé. Selon ces deux modes de réalisation du procédé objet de l'invention, l'étape d'obtention d'une plaque consolidée, étape considérée comme incontournable selon l'art antérieur, est supprimée.

## Revendications

1. Procédé pour la réalisation, par estampage à chaud, d'une pièce composite à renfort fibreux continu dans une matrice thermoplastique, le procédé comportant les étapes consistant à :
a. obtenir un flan (160) consistant en une stratification non consolidée de plis consistant en des nappes (110, 310) unidirectionnelles de fibres pré-imprégnées d'un polymère thermoplastique ;
b. chauffer à l'air libre le flan (160) non consolidé à une température supérieure ou égale à la température de fusion (220) du polymère constituant la matrice ;
c. estamper à chaud le flan (160) non consolidé suite à son chauffage à l'étape b) en le déformant entre une matrice (150) et un effecteur de forme complémentaire à celle de la matrice (150) de sorte à constituer une pièce en forme.

2. Procédé selon la revendication 1, dans lequel l'étape a) comprend une étape consistant à assembler les plis par des points de soudure.

3. Procédé selon la revendication 1, dans lequel chaque pli du flan est constitué de bandes (110, 310) assemblées bord à bord par une soudure (140, 340).

4. Procédé selon la revendication 1, comprenant avant l'étape a) une étape consistant d0 consistant à sélectionner, pour la constitution de la matrice, un polymère thermoplastique comportant une température (245), dite de recristallisation, entre la température (210) de transition vitreuse, Tg, et la température (220) de fusion, Tf, dudit polymère, et comprenant les étapes consistant à :
di réaliser une analyse calorimétrique différentielle à balayage du pré-imprégné
dii. sélectionner ledit préimprégné si le résultat de ladite calorimétrie différentielle à balayage fait apparaître au chauffage un pic (241) exothermique entre la température (210) de transition vitreuse et la température (220) de fusion du polymère, la température (245) du pic exothermique étant considérée comme la température de recristallisation
et dans lequel l'étape a) comprend une étape consistant à :
ai. draper les plis, sous la forme de bandes préimprégnées, au moyen d'une machine à draper comportant un moyen de chauffage de ladite bande, la température de chauffage de la bande lors de la dépose étant inférieure à la température de fusion (220) du polymère et supérieure à la température (245) de recristallisation.

5. Procédé selon la revendication 4, dans lequel l'étape de sélection d) du polymère constituant la matrice, consiste à sélectionner un polyétheréthercétone semi-cristallin dont le taux de cristallinité à température ambiante est compris entre 5 % et 20 %.

6. Procédé selon la revendication 6, dans lequel l'étape ai) est réalisée à une température comprise entre 200 °C et 330 °C, préférentiellement 250 °C.

7. Procédé selon la revendication 1, dans lequel l'étape a) est réalisée en empilant les plis sur un outillage (100, 300), dit de transfert, comportant des moyens (105, 305) de positionnement et de maintien des plis sur leur périphérie.

8. Procédé selon la revendication 8, dans lequel l'outillage de transfert est un cadre (100) et l'étape b) est réalisée alors que les plis empilés lors de l'étape a) sont sur ledit cadre (100).

9. Procédé selon la revendication 8, dans lequel l'outillage de transfert comprend un film (300) polyimide, les plis étant assemblés et maintenus sur ledit film par un ruban(305) adhésif sur leur périphérie.

## Patentansprüche

1. Verfahren zur Herstellung, durch Heißprägen, eines Verbundteiles mit kontinuierlicher faseriger Verstärkung in einer thermoplastischen Matrix, wobei das Verfahren die folgenden Schritte beinhaltet, bestehend aus:
a. Erhalten eines Rohlings (160), bestehend aus einer nicht konsolidierten Schichtung von Falten, bestehend aus unidirektionalen Schichten (110, 310) aus mit einem thermoplastischen Polymer vorimprägnierten Fasern;
b. Erwärmen des nicht konsolidierten Rohlings (160) im Freien auf eine Temperatur größer oder gleich der Schmelztemperatur (220) des die Matrix bildenden Polymers;
c. Heißprägen des nicht konsolidierten Rohlings (160) nach dessen Erwärmung in Schritt b), indem er zwischen einer Matrix (150) und einem Effektor mit einer zu jener der Matrix (150) ergänzenden Form verformt wird, um ein geformtes Teil zu bilden.

2. Verfahren nach Anspruch 1, wobei der Schritt a) einen Schritt umfasst, der darin besteht, die Falten durch Schweißpunkte zusammenzufügen.

3. Verfahren nach Anspruch 1, wobei jede Falte des Rohlings aus Bändern (110, 310) gebildet ist, die stoßweise durch eine Schweißung (140, 340) zusammengefügt werden.

4. Verfahren nach Anspruch 1, umfassend vor dem Schritt a) einen Schritt d), darin bestehend, zur Bildung der Matrix ein thermoplastisches Polymer auszuwählen, das eine Temperatur (245), Rekristallisationstemperatur genannt, zwischen der Glasübergangstemperatur (210), Tg, und der Schmelztemperatur (220), Tf, des Polymers beinhaltet, und die folgenden Schritte umfassend, bestehend aus:
di Durchführen einer kalorimetrischen Differenzanalyse durch Abtasten des Vorimprägnierten
dii. Auswählen des Vorimprägnierten, wenn das Ergebnis der Differenzkalorimetrie durch Abtasten beim Erwärmen eine exotherme Spitze (241) zwischen der Glasübergangstemperatur (210) und der Schmelztemperatur (220) des Polymers erscheinen lässt, wobei die Temperatur (245) der exothermen Spitze als Rekristallisationstemperatur angenommen wird und wobei der Schritt a) einen Schritt umfasst, bestehend aus:
ai. Drapieren der Falten in Form von vorimprägnierten Bändern anhand einer Drapiermaschine, die ein Mittel zum Erwärmen des Bandes beinhaltet, wobei die Erwärmungstemperatur des Bandes beim Ablegen geringer als die Schmelztemperatur (220) des Polymers und höher als die Rekristallisationstemperatur (245) ist.

5. Verfahren nach Anspruch 4, wobei der Auswahlschritt d) des Polymers, welches die Matrix bildet, darin besteht, ein halbkristallines Polyetheretherketon auszuwählen, dessen Kristallinität bei Umgebungstemperatur zwischen 5 % und 20 % enthalten ist.

6. Verfahren nach Anspruch 6, wobei der Schritt ai) bei einer Temperatur, die zwischen 200 °C und 330 °C enthalten ist, vorzugsweise bei 250 °C durchgeführt wird.

7. Verfahren nach Anspruch 1, wobei der Schritt a) durch Stapeln der Falten auf einem Werkzeug (100, 300), Transferwerkzeug genannt, durchgeführt wird, welches Mittel (105, 305) zum Positionieren und Halten der Falten auf deren Umfang beinhaltet.

8. Verfahren nach Anspruch 8, wobei das Transferwerkzeug ein Rahmen (100) ist, und der Schritt b) durchgeführt wird, während sich die gestapelten Falten beim Schritt a) auf dem Rahmen (100) befinden.

9. Verfahren nach Anspruch 8, wobei das Transferwerkzeug einen Polyimid-Film (300) umfasst, wobei die Falten durch ein Klebeband (305) an deren Umfang auf dem Film zusammengefügt und gehalten werden.

## Claims

1. A method for manufacturing, by hot-stamping, a composite part having continuous fibrous reinforcement in a thermoplastic matrix, the method comprising the steps of:
a. obtaining a blank (160) consisting of an unconsolidated lamination of plies consisting of unidirectional layers (110, 310) of fibres pre-impregnated with a thermoplastic polymer;
b. heating the unconsolidated blank (160) in the open air to a temperature higher than or equal to the melting temperature (220) of the polymer making the matrix;
c. hot-stamping the unconsolidated blank (160) following the heating step b) by deforming it between a matrix (150) and a shaping device or complementary shape to that of the matrix (150) so as to make part in shape.

2. The method according to claim 1, wherein step a) comprises a step of assembling the plies by welding spots.

3. The method according to claim 1, wherein each ply of the blank consists of strips (110, 310) assembled edge to edge by a weld (140, 340).

4. The method according to claim 1, comprising prior to step a) a step d) of selecting, for the constitution of the matrix, a thermoplastic polymer with a temperature, so-called a recrystallisation temperature (245), between the glass transition temperature (210), Tg, and the melting temperature (220), Tf, of said polymer; and comprising the steps of:
di. performing a differential scanning calorimetry analysis of the pre-impregnated material
dii. selecting said pre-impregnated material if the result of said differential scanning colorimetry shows upon heating an exothermic peak (241) between the glass transition temperature (210) and the melting temperature (220) of the polymer, the temperature (245) of the exothermic peak being considered as the recrystallisation temperature
and wherein step a) comprises a step of:
ai. draping the plies, in the form of pre-impregnated strips, by means of a draping machine including a means for heating said strip, the heating temperature of the strip during the deposition being lower than the melting temperature (220) of the polymer and higher than the recrystallisation temperature (245).

5. The method according to claim 4, wherein the step of selecting d) the polymer making the matrix, consists of selecting a semi-crystalline polyetheretherketone with a degree of crystallinity at ambient temperature comprised between 5% and 20%.

6. The method according to claim 6, wherein step ai) is performed at a temperature between 200°C and 330°C, preferably 250°C.

7. The method according to claim 1, wherein step a) is performed by stacking the plies on a so-called transfer tool (100, 300), including means (105, 305) for positioning and holding the plies on the periphery thereof.

8. The method according to claim 8, wherein the transfer tool is a frame (100) and step b) is performed while the plies stacked during step a) are on said frame (100).

9. The method according to claim 8, wherein the transfer tool comprises a polyimide film (300), the plies being assembled and held on said film by an adhesive tape (305) on the periphery thereof.
